# EUROPEAN PATENT SPECIFICATION

(11) **EP 4 287 591 B1**
(45) Date of publication and mention of the grant of the patent: **17.12.2025**
(21) Application number: 22845059.9
(22) Date of filing: 21.06.2022
(51) Int. Cl.: H04L 69/14, H04L 69/327, H04L 65/612, H04L 65/70, H04L 65/80, H04L 65/75

(54) **DATA TRANSMISSION METHOD, AND SERVER, STORAGE MEDIUM AND PROGRAM PRODUCT**
DATENÜBERTRAGUNGSVERFAHREN SOWIE SERVER, SPEICHERMEDIUM UND PROGRAMMPRODUKT
PROCÉDÉ DE TRANSMISSION DE DONNÉES, SERVEUR, SUPPORT DE STOCKAGE ET PRODUIT-PROGRAMME

(30) Priority: 21.07.2021 CN 202110827938
(43) Date of publication of application: 06.12.2023
(73) Proprietor: Tencent Technology (Shenzhen) Company Limited, Shenzhen, Guangdong 518057 (CN)
(72) Inventor: HAN, Rui, Shenzhen, Guangdong 518057 (CN); LIU, Honghao, Shenzhen, Guangdong 518057 (CN); XIAO, Jianjun, Shenzhen, Guangdong 518057 (CN); ZHANG, Fucai, Shenzhen, Guangdong 518057 (CN); WEN, Nian, Shenzhen, Guangdong 518057 (CN)
(74) Representative: Novagraaf International SA
(86) International application number: PCT/CN2022/099987
(87) International publication number: WO 2023/000894

(56) References cited:
- EP-B1- 3 371 934
- WO-A1-2020/176038
- CN-A- 101 719 918
- CN-A- 104 753 971
- CN-A- 108 604 994
- CN-A- 108 932 948
- CN-A- 110 943 998
- CN-A- 111 316 598
- CN-A- 113 572 836
- US-A1- 2017 093 811
- US-A1- 2020 280 510
- LI GUODONG, LI KAI, LI JUN, LIU CHANG′AN: "Primary Path Automatic Handover Based on Comprehensive Performance Evaluation Method", HUAZHONG KEJI DAXUE XUEBAO (ZIRAN KEXUE BAN)/JOURNAL OF HUAZHONG UNIVERSITY OF SCIENCE AND TECHNOLOGY (NATURAL SCIENCE EDITION), HUAZHONG KEJI DAXUE, CN, vol. 39, no. II, 15 November 2011 (2011-11-15), CN , pages 235 - 238, XP093026637, ISSN: 1671-4512, DOI: 10.13245/j.hust.2011.s2.065

## Description

### RELATED APPLICATION

This application claims priority to Chinese Patent Application No. 202110827938.0, entitled "METHOD AND APPARATUS FOR TRANSMITTING DATA, SERVER, AND STORAGE MEDIUM" and filed with the China National Intellectual Property Administration on July 21, 2021.

### FIELD OF THE TECHNOLOGY

The present disclosure relates to the field of data transmission technology, and in particular, to data transmission.

### BACKGROUND OF THE DISCLOSURE

Advent of the big-data era engenders increasingly wide application of various types of data. For example, content of cloud videos is stored in a cloud video server, and the cloud video server provides a video service, such as video on demand, livestreaming, video calls, and cloud gaming, to a terminal device of a user.

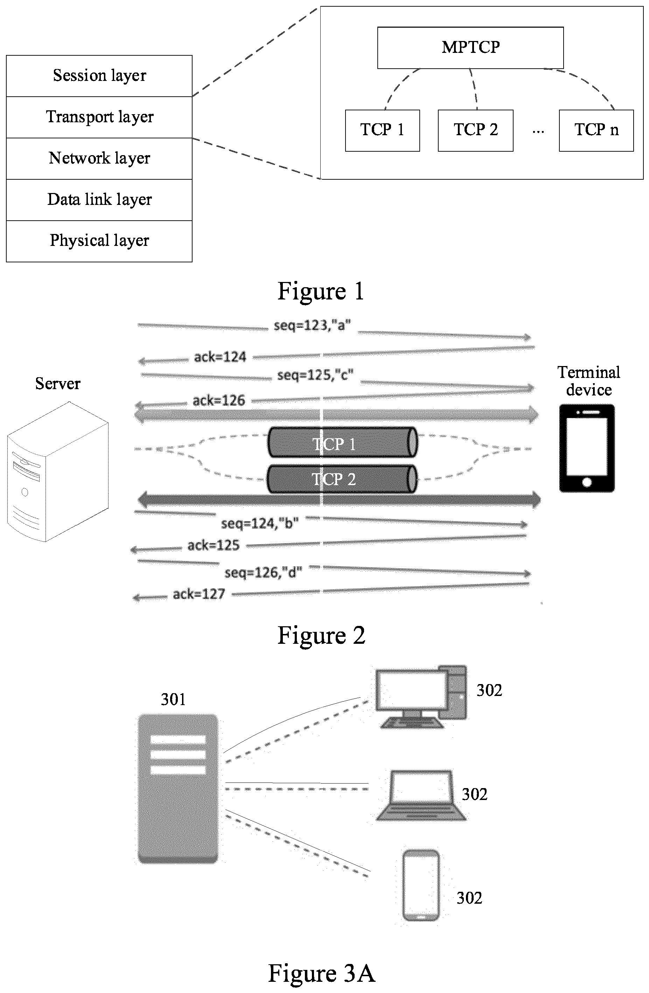

In conventional technology, a server generally adopts a transmission solution using multiple channels and a single protocol. The multi-channel transmission solution, although providing additional candidate channels, achieves few improvements in quality of services. For example, multiple transmission control protocol (TCP) channels are established in the multipath TCP (MPTCP) solution, and a server divides a to-be-transmitted video stream into multiple sub-flows which are transmitted through the multiple TCP channels. Figure 1 is a schematic diagram of architecture of a stack in a MPTCP transmission solution. As shown in Figure 1, TCP 1, TCP 2, ..., and TCP n in a transport layer are n different channels under the TCP. Figure 2 is a schematic diagram of transmitting data packets sequentially in sub-flows in an MPTCP transmission solution. As shown in Figure 2, sub-flow a, sub-flow b, sub-flow c, and sub-flow d are transmitted through two TCP channels (TCP 1 and TCP 2), seq represents a sequential number of a data packet in a sub-flow, and ack represents an acknowledgment indicating permission of transmitting another data packet having the next sequential number. For example, after the data packet having sequential number 123 is transmitted in sub-flow a, the data packet having sequential number 124 is not transmitted in sub-flow b through the other TCP channel until the corresponding acknowledgment is obtained. As an example, patent documents with publication no. US 2020280510 A1 and publication no. EP 3371934 B1 disclose a method of communicating data using virtualization, in which endpoint software at the first device splits data for communication into different streams, and the endpoint software selects different deflects for communicating different data streams.

In the MPTCP solution, the multiple TCP channels share a same set of sequential numbers, that is, a protocol requires that the sequential numbers of the data packets transmitted through the multiple TCP channels are incremental. For example, the data packet having sequential number x+1 needs to be transmitted to a receiving peer only when the data packet having sequential number x is acknowledged by the receiving peer (i.e., a message of acknowledgment is received from the peer). Due to such constraint, any lost packet in the sequence must be re-transmitted for recovery, and inconsecutive sequential numbers are not allowed. Hence, when packet loss occurs in a sub-flow of a channel, the transmission in all channels needs to wait. The MPTCP solution thus has limited freedom in transmission of video data, and cannot provide data transmission services having satisfactory quality in various scenarios. For example, a player cannot operate smoothly in cloud gaming, a user can observe obvious video stuttering during a video call, an audience views asynchronous sound and images of a streamer during livestreaming, and the like. Therefore, improving freedom in data transmission and improving quality of data transmission services have become an urgent problem in the field.

### SUMMARY

A method for transmitting data, a server, a storage medium and a program product are provided according to embodiments of the present disclosure. Freedom in data transmission and quality of data transmission services are improved.

In one aspect, a method for transmitting data is provided, comprising: dividing, in a session layer, content to be transmitted to a target terminal device into data units; transmitting a part of the data units, which are distributed in the session layer, to the target terminal device through a designated channel of the content, where a first transmission channel serves as the designated channel of the content; and in response to the designated channel being switched through the session layer from the first transmission channel to a second transmission channel, distributing, in the session layer, another part of the data units to a second transmission channel, where the first transmission channel and the second transmission channel adopt different transmission protocols in a transport layer, and transmitting the another part of the data units to the target terminal device through the second transmission channel.

In another aspect, an apparatus not claimed, for transmitting data is provided, comprising: a data-unit dividing module, configured to divide, in a session layer, content to be transmitted to a target terminal device into data units; a transmitting unit, configured to transmit a part of the data units, which are distributed in the session layer, to the target terminal device through a designated channel of the content, where a first transmission channel serves as the designated channel of the content; and a data-unit distributing unit, configured to distribute, in the session layer, another part of the data units to a second transmission channel in response to the designated channel being switched through the session layer from the first transmission channel to a second transmission channel, where the first transmission channel and the second transmission channel adopt different transmission protocols in a transport layer; where the transmitting unit is further configured to transmit the another part of the data units to the target terminal device through the second transmission channel.

In another aspect, a server for transmitting data is provided, comprising: a processor and a memory, where the memory is configured to store a program code and transmit the program code to the processor, and the processor is configured to perform the method in the foregoing aspect according to instructions in the program code.

In another aspect, a computer-readable storage medium is provided, where computer-readable storage medium is configured to store a program code, and the program code is configured to perform the method in the foregoing aspect.

In another aspect, a computer program product comprising instructions is provided, where the computer program product when executed on a computer causes the computer to perform the method in the foregoing aspect.

As can be seen from the foregoing technical solutions, the embodiments of the present disclosure have the following advantages.

In the method for transmitting data according to embodiments of the present disclosure, the first transmission channel and the second transmission channel that are connected to the target terminal device are established in the transport layer, and the two channels adopt different transmission protocols. Before transmitted to the target terminal device, the to-be-transmitted content is divided into the data units in the session layer, and a decision for switching the designated channel for transmitting the to-be-transmitted content is made in the session layer. When the designated channel is switched through the session layer from the first transmission channel to the second transmission channel, the data units are distributed in the session layer to the second transmission channel, and are transmitted to the target terminal device through the second transmission channel. Since the transmission protocols of the two transmission channels are different and the session layer is responsible for dividing and distributing the data units, the data transmission is not subject to a constraint due to an intrinsic set of sequential numbers for a transmission protocol, which facilitates the session layer managing and distributing data on its own. Therefore, the data transmission is freed from the constraint of the same sequence space of one transmission protocol, so that the freedom of transmission and the quality of data transmission services are effectively improved. A user of the target terminal device can experience the transmitted content more smoothly. In addition, the multi-channel design can increase reliability of the data transmission.

### BRIEF DESCRIPTION OF THE DRAWINGS

Figure 1 is a schematic diagram of architecture of a stack in an MPTCP transmission solution.
Figure 2 is a schematic diagram of transmitting data packets sequentially in multiple sub-flows in an MPTCP transmission solution.
Figure 3A is an architectural diagram of an application scenario of a method for transmitting data according to an embodiment of the present disclosure.
Figure 3B is a schematic diagram of a framework of a communication model between a server and a target terminal device according to an embodiment of the present disclosure.
Figure 3C is a schematic diagram of a video-stream producing device transmitting to-be-transmitted content to a server according to an embodiment of the present disclosure.
Figure 4 is a flowchart of a method for transmitting data according to an embodiment of the present disclosure.
Figure 5 is a schematic diagram of a server distributing data units to transmission channels through a session layer according to an embodiment of the present disclosure.
Figure 6 is a flowchart of a method for transmitting data according to another embodiment of the present disclosure.
Figure 7A is a schematic diagram of multiple data units in different transmission states according to an embodiment of the present disclosure.
Figure 7B is a schematic diagram of distributing data units selectively to a second transmission channel according to an embodiment of the present disclosure.
Figure 8 is a schematic diagram of distributing data units among multiple channels according to an embodiment of the present disclosure.
Figure 9 is a schematic diagram of distributing data units, which are stacking in a first transmission channel and wait for re-transmission, to a second transmission channel according to an embodiment of the present disclosure.
Figure 10 is a schematic structural diagram of an apparatus for transmitting data according to an embodiment of the present disclosure.
Figure 11 is a schematic structural diagram of a server for transmitting data according to an embodiment of the present disclosure.
Figure 12 is a schematic structural diagram of a terminal device for transmitting data according to an embodiment of the present disclosure.

### DESCRIPTION OF EMBODIMENTS

At present, when a data transmission service is provided to a terminal device of a user, video data is usually transmitted through channels under the same protocol. Transmission using a single channel data transmission is obviously incapable to deal with transmission problems, and hence multi-channel transmission solutions emerges. The multipath transmission control protocol (MPTCP) is one of the multi-channel transmission solutions. Due to a constraint of the protocol, data packets transmitted through all TCP channels are subject to the same set of sequential numbers in the MPTCP transmission solution. Transmission of a data packet having a subsequent sequential number is not permitted until a data packet which is currently transmitted is acknowledged by a receiving peer. Therefore, transmitting data through the MPTCP solution has limited freedom, and quality of data transmission services provided for users are affected.

In order to address the foregoing issue, a method and an apparatus for transmitting data, a server, and a storage medium are provided according to embodiments of the present disclosure. Hereinafter the method for transmitting data is introduced in conjunction with an actual application scenario.

Herein the method for transmitting data is applicable to a computer device having a function of data transmission, such as a server or a terminal. The terminal may be, but is not limited to a smart phone, a desktop computer, a notebook computer, a tablet computer, a smart speaker, a smart watch, or the like. The server may be an independent physical server, or may be a server cluster or a distributed system comprising multiple physical servers. In addition, the server may be a cloud server which provides basic cloud computing services, such as a cloud service, a cloud database, cloud computing, a cloud function, cloud storage, a network service, cloud communication, a middleware service, a domain name service, a security service, a CDN, and a platform of big data and artificial intelligence.

Cloud technology is a hosting technology that unifies a series of resources such as hardware, software, and networks in a wide area network or a local area network to implement computing, storage, processing, and sharing of data. The cloud technology is a collective name of network technology, information technology, integration technology, management platform technology, application technology, and the like, which are based on application of a business mode using cloud computing. The cloud technology may provide a resource pool which is used on demand, and hence is flexible and convenient. The cloud computing becomes an important support, since a background service of a technical network system, such as video websites, image websites, and portal websites which is more common, requires a large amount of computing and a large quantity of storage resources. As the Internet industry is highly developed and applied, each article may have its own identifier in the future and needs to be transmitted to a background system for logical processing. Data at different levels is separately processed, and data in various industries requires support of a strong system, which can only be implemented through the cloud computing.

In order to facilitate understanding, it is taken as an example that a player (a user) plays a game for entertainment via a target terminal device. Hereinafter an implementation scenario of cloud gaming is introduced. The cloud gaming, also called gaming on demand, is an online gaming technique based on the cloud computing. The cloud gaming enables a light terminal having a limited capability of graphics processing and data computing to run high-quality games. In cloud gaming, a game runs in a cloud server rather than a game terminal of the player, and the cloud server renders a game scene into a video-audio stream and transmits the video-audio stream to the game terminal via a network. The game terminal is not necessary to have a strong capability of graphics computing and data processing, and only needs to have a capability of basic streaming media playback and a capability of obtaining input instructions of the player and transmitting the instructions to the cloud server.

Hereinafter the method for transmitting data and described by taking a server as an executing entity. It is appreciated that the method may be alternatively executed by a terminal device.

Figure 3A is an architectural diagram of an application scenario of a method for transmitting data according to an embodiment of the present disclosure. As shown in Figure 3A, the application scenario comprises a server 301 and terminal devices 302. In actual application, the server 301 may be connected in communications to one or more terminal devices 302.

In order to facilitate illustration and understanding, herein a target terminal device is defined. The target terminal device 302 may be any of the terminal devices 302 connected in communications to the server 301. Herein the server 301 server as an entity of performing data transmission, and at least two transmission channels having different transmission protocols are established between the server 301 and the target terminal device 302. In order to facilitate illustration and understanding, a first transmission channel and a second transmission channel are taken as an example. For example, the first transmission channel may be a transmission channel using the transmission control protocol (TCP), and the second transmission channel may be a transmission channel using the user datagram protocol (UDP). In Figure 3A, a dashed line and a solid line between the server 301 and the target terminal device 302 represent the first transmission channel and the second transmission channel, respectively.

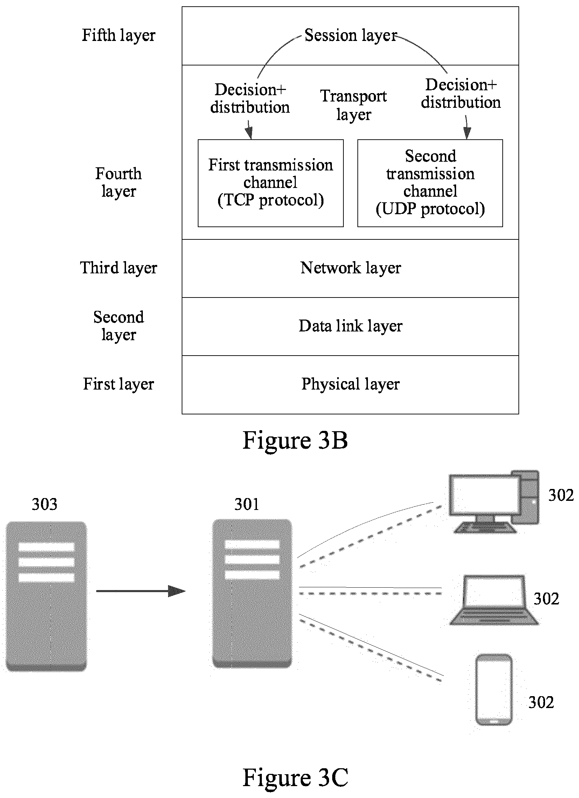

Figure 3B is an architectural diagram of a communication model between a server and a target terminal device. As shown in Figure 3B, the communication model comprises a session layer, a transport layer, a network layer, a data link layer, and a physical layer. The transport layer comprises transmission channels using different transmission protocols, and only the first transmission channel (under the TCP) and the second transmission channel (under the UDP) are depicted in Figure 3B for simplicity. Specific transmission protocols corresponding to the transmission channels are not limited herein.

When the server transmits data to the target terminal device, the architecture of the communication model as shown in Figure 3B functions as follows. The first layer, i.e., the physical layer, is responsible for transmission of original bit streams via mechanical, electronic, and timing interface communication channels. The second layer, i.e., the data link layer, is responsible for physical addressing and for transforming the original bit streams into logical transmission links. Generally, the first layer and the second layer are implemented through network adaptors and network cables. The third layer, i.e., the network layer, is responsible for controlling operations of a subnet, for example, performing logical addressing, packet transmission, and route selection. The fourth layer, i.e., the transport layer, is response for transmitting to-be-transmitted content to a receiving peer (namely, the target terminal device), and receiving an acknowledgment from the receiving peer. The fifth layer, i.e., the session layer, is responsible for establishing a session with the target terminal device and managing the session. Hereinafter an important role of the session layer in the architecture of the foregoing communication model is mainly introduced with respect to data transmission.

Transmission of content from the server 301 to the target terminal device 302 is not only operated in the transport layer solely, but also involves the session layer. The to-be-transmitted content may be multimedia data, such as a video and an audio. In practice, the server 301 divides the to-be-transmitted content, which needs to be provided for the target terminal device, in the session layer to obtain multiple of data units of the to-be-transmitted content. The data units obtained through the division in the session layer may be uniformly managed in the session layer, and the management includes recognizing a transmission state and an importance identifier of the data unit and controlling distribution of the data units. That is, boundaries and states of the data units are managed in the session layer. Herein a designated channel of the to-be-transmitted content is switched in the session layer. The data units may be managed and distributed to a new designated channel in the session layer, and transmission protocols of the designated channels before and after the switching are different. Hence, the new designated channel only needs to transmit the data units, which are distributed in the session layer to the new designated channel, to the target terminal device 302, and may skip the transmission of the other data units which are not distributed. Thereby, transmission of the data units of the to-be-transmitted content is managed and controlled in the session layer, which improves the freedom in data transmission and the quality of data transmission services. Users' experience is also improved.

In practice, the to-be-transmitted content that the server 301 divides in the session layer may be provided by a video-stream producing device 303. Figure 3C is a schematic diagram of the video-stream producing device 303 transmitting the to-be-transmitted content to the server 301.

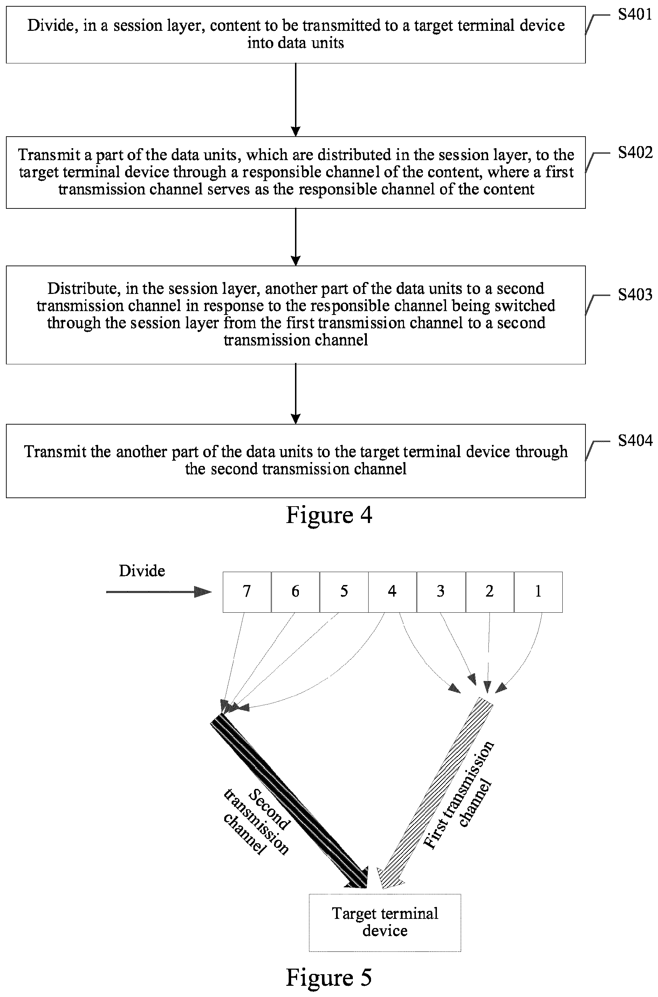

Figure 4 is a flowchart of a method for transmitting data according to an embodiment of the present disclosure. The method is applicable to the server 301 in the data transmission architecture as shown in Figure 3A, and the solution is implemented at the server 301. A basis of implement of this solution lies in at least two transmission channels having different transmission protocols. The two channels are established between the server and the target terminal device, and are used or reserved for data transmission.

As shown in Figure 4, the method for transmitting comprises following steps S401 to S404.

In step S401, content to be transmitted to a target terminal device is divided into data units in a session layer.

Herein the to-be-transmitted content is content to be transmitted by the server to the target terminal device. A scenario of cloud gaming is taken as an example. The target terminal device runs an application program of a game, and a video stream of the game is integrated at a cloud video server. The cloud video server is required to transmit video data of the game, which serves as the to-be-transmitted content, to the target terminal device.

Herein the server divides the to-be-transmitted content (e.g., a video stream) into multiple data units in the session layer before transmitting the to-be-transmitted content, so as to facilitate its accurate distribution and management on the video data. Dividing the to-be-transmitted content into the data units in the session layer can free the data transmission from a constraint imposed by an intrinsic set of sequential numbers under a transmission protocol on a specific transmission channel. Hence, it is convenient to manage and distribute data solely in the session layer.

Hereinafter embodiment of dividing the to-be-transmitted content is introduced.

A video is taken as an example of the to-be-transmitted content. In an optional embodiment, a data size of a video frame and a data size of a data packet are determined for the video in the session layer. A minimum between the video frame and the data packet with respect to the data size serve as division granularity, and the video is divided into the data units in the session layer according to the division granularity. In a case that the video frame is smaller than the data packet in the data size, the video frame serves as the division granularity for dividing the to-be-transmitted content into the data units. In a case that the data packet is smaller than the video frame in the data size, the data packet serves as the division granularity for dividing the to-be-transmitted content into the data units.

Herein the minimum between the data packet and the video frame with respect to the data size serves as the division granularity of the video, and thereby the data units are managed under smaller granularity. Finer management and distribution of the video data can be achieved in the session layer.

The data units obtained through the division in the session layer may be subject to unified numbering and management in the session layer, for example, they are numbered as 1, 2, 3, and the like. During the division, the numbering may be performed according to a sequence of the pieces of data forming the to-be-transmitted content (for example, a sequence of frames forming the video). Herein the management and numbering on the data units in the session layer are different from allocating sequential numbers to data based on a set of sequential numbers under a transmission protocol for the first transmission channel, and are also different from allocating sequential numbers to data based on a set of sequential numbers under a transmission protocol for the second transmission channel. That is, the numbering on the data units are independent from the set of sequential numbers under any transmission protocol, and are also freed from the constraint imposed by transmitting data sequentially based on consecutive sequential numbers under any transmission protocol.

In step S402, a part of the data units distributed in the session layer is transmitted to the target terminal device through a designated channel of the content, where a first transmission channel serves as the designated channel of the content.

Herein a channel among the transmission channels established between the server and the target terminal device, which is responsible for transmitting the to-be-transmitted content, is called the designated channel. In order to facilitate understanding, it is assumed that the first transmission channel serves as the designated channel before switching of the designated channel, i.e., serves as an original channel for transmitting the data units. After switching of the designated channel, the second transmission channel serves as the designated channel, i.e., serves as a current channel for transmitting the data units. Herein the transmission protocol for the first transmission channel is not limited, and hence the original channel is not specifically limited.

Herein it is determined in the session layer which transmission channel serves as the designated channel of the to-be-transmitted content. For example, in practice, the first transmission channel and the second transmission channel may be sampled (i.e., at a predetermined interval or frequency) through the session layer, so as to obtain network sampling results of the two transmission channels. An object of the sampling may include, but is not limited to, a quantity of data units stacking in a channel, a packet loss ratio of a channel, a round trip time (RTT) of a channel, and the like. The network sampling result refers to a result of sampling the foregoing object.

In an optional embodiment, the server may make a decision between the two channels in the session layer based on the network sampling results. For example, the channel having a better network sampling result is determined to serve as the current designated channel. Before step S402, a decision has already been made between the first transmission channel and the second transmission channel, and it was determined that the first transmission channel serves as the designated channel.

In step S403, another part of the data units is distributed in the session layer to a second transmission channel, in a case that the designated channel is switched through the session layer from the first transmission channel to a second transmission channel.

The network sampling on the transmission channels is performed continuously or periodically. During transmission of the data units, the network sampling result of the first transmission channel is not unchanged but may be subject to fluctuations. Thereby, the designated channel may be switched through the session layer from the first transmission channel to another transmission channel having a different protocol, e.g., the second transmission channel, based on the network sampling result. After the designated channel is switched, the data units is no longer distributed in the session layer to the original designated channel (namely, the first transmission channel), but to the new designated channel (namely, the second transmission channel).

The data units distributed to the second transmission channel may comprise the data units of various types, for example, the data unit(s) that have not been transmitted through the first transmission channel, and the data unit(s) that have been transmitted through the first transmission but fail the transmission.

In step S404, the another part of the data units is transmitted to the target terminal device through the second transmission channel.

In this step, the second transmission channel is only responsible for transmitting the data units which the session layer distributes to the second transmission channel.

Figure 5 is a schematic diagram of a server distributing data units to transmission channels through a session layer according to an embodiment of the present disclosure. As shown in Figure 5, data units 1 to 4 are distributed to the first transmission channel, data unit 4 needs to be further distributed to the second transmission channel, and data units 5 to 7 that have not been distributed need to be distributed to the second transmission channel. The foregoing altered distribution is due to the designated channel of the to-be-transmitted content being switched from the first transmission channel to the second transmission channel. The second transmission channel is only responsible for transmitting data units 4, 5, 6, and 7 to the target terminal device, and does not need to transmit data units 1 to 3 which are not distributed to the second transmission channel. Data unit 4 may be a data unit which is not successfully transmitted through the first transmission channel and thus needs to be re-transmitted.

That is, the first transmission channel and the second transmission channel are established between the server and the target terminal device, and the two channels adopt different transmission protocols. Before the server transmits the to-be-transmitted content to the target terminal device, the to-be-transmitted content is divided into the data units in the session layer, and a decision for switching the designated channel for transmitting the to-be-transmitted content is made in the session layer. When the designated channel is switched through the session layer from the first transmission channel to the second transmission channel, the data units are distributed in the session layer to the second transmission channel, and are transmitted to the target terminal device through the second transmission channel. Since the transmission protocols of the two transmission channels are different and the session layer is responsible for dividing and distributing the data units, the data transmission is not subject to a constraint due to an intrinsic set of sequential numbers for a transmission protocol, which facilitates the session layer managing and distributing data on its own. Therefore, the data transmission is freed from the constraint of the same sequence space of one transmission protocol, and only the data units distributed after the switching needs to be transmitted, so that the freedom of transmission and the quality of data transmission services are effectively improved. A user of the target terminal device can experience the transmitted content more smoothly.

In conventional technology, the data transmission is usually solely performed through a transport layer, which results in that an effect of the data transmission experienced by a user does not meet an actual demand. For example, an actual bit rate is too low and latency is too large. A main reason lies in that the demand cannot be sensed by the transport layer. IN order to address the foregoing issue, another method for transmitting data is further provided according to an embodiment of the present disclosure. The session layer refers to a performance requirement concerning the to-be-transmitted content when determining a designated channel, and hence the transmission effect of the determined channel can match the demand better. Thereby, the quality of data transmission services and users' experience are improved.

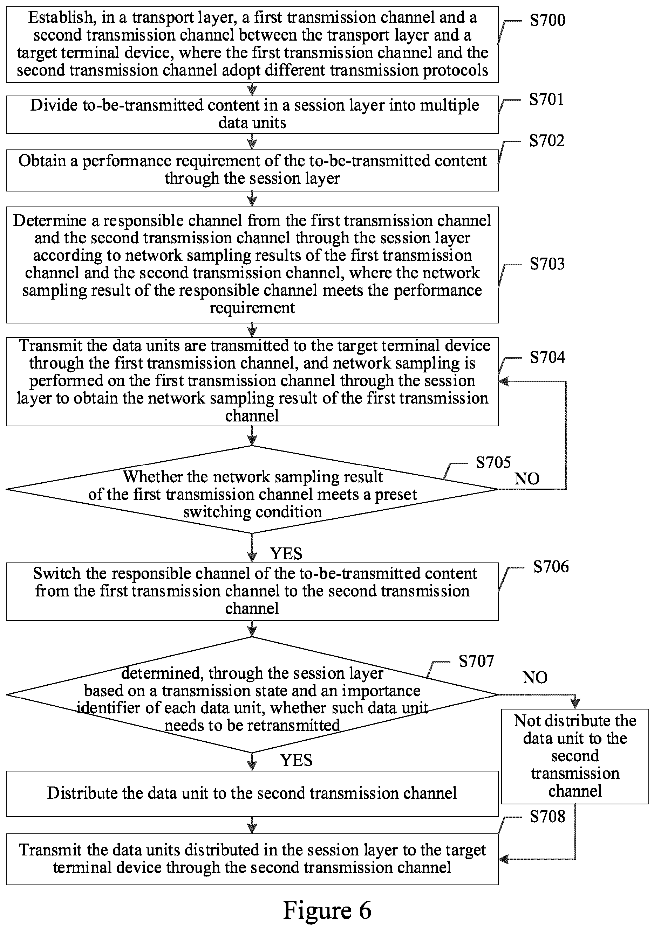

Figure 6 is a flowchart of another method for transmitting data according to an embodiment of the present disclosure. As shown in Figure 6, the method for transmitting data shown comprises following steps S700 to S708.

In step S700, a first transmission channel and a second transmission channel between the transport layer and a target terminal device are established in a transport layer, where the first transmission channel and the second transmission channel adopt different transmission protocols.

A schematic diagram of establishing communications between multiple channels having different transmission protocols and the target terminal device may refer to Figure 3A.

In step S701, to-be-transmitted content is divided in a session layer into multiple data units.

This step is implemented in a manner substantially identical to step S401, and hence may refer to the foregoing embodiment. Details are not repeated herein.

In step S702, a performance requirement of the to-be-transmitted content is obtained through the session layer.

The performance requirement of the to-be-transmitted content may include information in various aspects, for example, a bit rate, a transmission rate, latency, resolution, and the like, of a video. Hereinafter two exemplary manners of obtaining the performance requirement of the to-be-transmitted content are introduced.

In an embodiment, the performance requirement of the to-be-transmitted content may be received from the target terminal device through the session layer. The performance requirement may be settings which concern the to-be-transmitted content and are configured by a user of the target terminal device. For example, the to-be-transmitted content is a cloud game, a player configures the foregoing requirements, and the settings may be uploaded to the server after being configured.

In another embodiment, the performance requirement of the to-be-transmitted content may be determined through the session layer based on a type of the to-be-transmitted content. For example, different types of videos correspond to different performance requirements. For example, a player playing a cloud game may be involved in a battle mode of the game, and hence the cloud game needs to guarantee a high bit rate and quite small latency to ensure smooth operations experienced by the player. The foregoing requirements are lower in a video call service. Therefore, a mapping relationship between the types of the to-be-transmitted content and the performance requirements may be established in advance, so that the performance requirement of the to-be-transmitted content may be directly determined based on the type of the to-be-transmitted content according to the mapping relationship.

In step S703, a designated channel is determined from the first transmission channel and the second transmission channel through the session layer according to network sampling results of the first transmission channel and the second transmission channel, where the network sampling result of the designated channel meets the performance requirement.

In this step, it is taken as an example that the first transmission channel is determined to be designated channel.

In an embodiment, network statuses of the first transmission channel and the second transmission channel are kept being monitored. The performance requirement obtained in step S702 is compared with the network sampling results of the first transmission channel and the second transmission channel, so as to determine whether the first transmission channel and the second transmission channel each meets the performance requirement. For example, the first transmission channel may be selected as the designated channel of the to-be-transmitted content, in a case that the network sampling result of the second transmission channel indicates that the second transmission channel does not meet the performance requirement while the network sampling result of the first transmission channel indicates that the first transmission channel meets the performance requirement.

The network sampling results of the first transmission channel and the second transmission channel are determined, and performances of the transmission channels may be determined based on the network sampling results. Thereby, the transmission channel that meets the performance requirement can be accurately determined for transmitting the data units, and it is more likely that the data transmission is successful.

In addition, in a case that the network sampling results of the two transmission channels both meet the performance requirement, the transmission channel that matches the performance requirement better (that is, closer to the performance requirement) may be determined between the first transmission channel and the second transmission channel. For example, the first transmission channel serves as the designated channel of the to-be-transmitted content in a case that the network sampling result of the first transmission channel matches the performance requirement better. Selecting the transmission channel matching better can further ensure transmission performances.

In step S704, the data units are transmitted to the target terminal device through the first transmission channel, and network sampling is performed on the first transmission channel through the session layer to obtain the network sampling result of the first transmission channel.

In a specific embodiment, a quantity of data units stacking in the first transmission channel, a packet loss ratio of the first transmission channel, or an RTT of the first transmission channel may be sampled through the session layer.

In step S705, it is determined whether the network sampling result of the first transmission channel meets a preset switching condition. The process proceeds to step S706 in case of positive determination, and returns to step S704 in case of negative determination.

Reference is made to the description concerning step S704, where an object of the sampling may include three aspects, i.e., a quantity of stacking data units, a packet loss ratio, and an RTT. The switching condition may be set according to an actual requirement of determination. The preset switching condition comprises any one or any combination of following conditions.

A first condition is that the quantity of the data units stacking in the first transmission channel exceeds a predetermined quantity.

A second condition is that the packet loss ratio of the first transmission channel reaches a predetermined ratio.

A third condition is that the RTT exceeds a predetermined duration.

When the preset switching condition comprises a combination of two or more among the three conditions, the designated channel needs to be switched when any condition in the combination is met.

Meeting any one of the first condition to the third condition indicates that a data transmission service cannot achieve an expected quality in case of continuing transmitting the data units through the current channel, and user's experience would be poor. Meeting the first condition indicates that there is serious congestion in the first transmission channel and the data units can hardly be transmitted. Meeting the second condition indicates that the packet loss ratio is too high and the data units are seriously missing at a receiving peer. Meeting the third condition indicates that the latency is too large and the receiving peer experiences a serious break.

In a case that the preset switching condition is not met, the original channel is continuously used for transmitting the data units and subject to the monitoring.

The transmission performances of the transmission channels are determined through sampling in multiple aspects, which can effectively improve accuracy of determining the designated channel.

In step S706, in a case that the network sampling result meets the preset switching condition, the designated channel of the to-be-transmitted content is switched from the first transmission channel to the second transmission channel. Then, the process proceeds to step S707.

Herein when enabling the second transmission channel to transmit the data units to the target terminal device, it is not necessary to distribute all data units that are unsuccessfully transmitted through the first transmission channel to the second transmission channel, so as to improve quality of the data transmission service (for example, smoothness and a speed of video data transmission). In order to facilitate understanding, hereinafter introduced is an optional manner of selecting the data units to be distributed to the second transmission channel through the session layer according to a transmission state and an importance identifier of each data unit.

In step S707, it is determined, through the session layer based on a transmission state and an importance identifier of each data unit, whether such data unit needs to be retransmitted. The data unit is distributed to the second transmission channel and then the process proceeds to step S708, in case of positive determination. The data unit is not distributed to the second transmission channel and then the process proceeds to step S708 in case of negative determination.

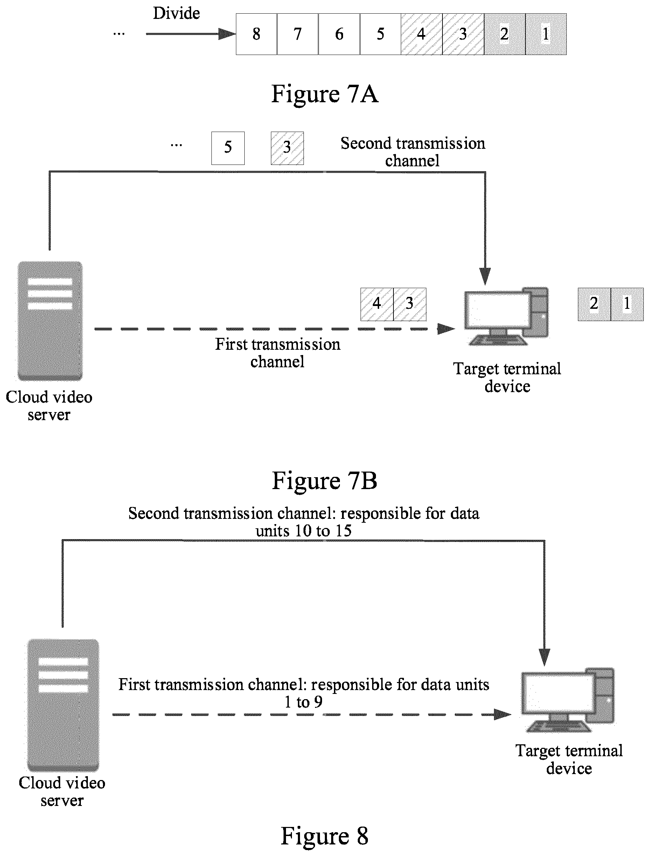

The transmission state and the importance identifier of the data unit may be recognized in the session layer. The transmission state of the data unit may include: not transmitted, successfully transmitted, and unsuccessfully transmitted. Being not transmitted refers to that the data unit has not been transmitted toward the target terminal device. Being successfully transmitted refers to that the data unit has been transmitted and an acknowledgment has been received from the receiving peer (namely, the target terminal device). Being unsuccessfully transmitted refers to that the data unit has been transmitted and no acknowledgment has been received from the receiving peer. Figure 7A shows multiple data units in different transmission states. Data units 1 and 2 are successfully transmitted data units, data units 3 and 4 are unsuccessfully transmitted data units, and data units 5 to 8 are data units not transmitted.

The importance identifier indicates a degree of importance of the data unit to the to-be-transmitted content, and may be assigned in the session layer and read in the session layer when required. A specific manner of the assignment may be based on an attribute of data. For example, one video frame serves as division granularity, and an assigned importance identifier is a first identifier in a case that the data unit is a key frame, and is a second identifier in a case that the data unit is not the key frame. The data unit having the first identifier is more important than that having the second identifier. As an example, the first identifier is "1", and the second identifier is "0".

Target data unit(s) which are unsuccessfully transmitted through the first transmission channel are recognized through the session layer based on the transmission states of all data units, and the importance identifier(s) of the target data unit(s) are recognized through the session layer. In a case that the importance identifier is the first identifier, the target data unit is distributed through the session layer to the second transmission channel. In a case that the importance identifier is the second identifier, the target data unit is not distributed to the second transmission channel. Hence, not all the unsuccessfully transmitted data units are necessary to be re-transmitted through the second transmission channel. Rather, they are selectively distributed to the second transmission channel according to importance.

In a case that the transmission state of the data unit indicates unsuccessful transmission and the importance identifier is the second identifier, the data unit is determined to be not re-transmitted. In a case that the transmission state of the data unit indicates unsuccessful transmission and the importance identifier is the first identifier, the data unit is determined to be re-transmitted.

The importance identifier enables selective re-transmission of the target data units. Transmission resources are reasonably utilized while ensuring transmission quality, thereby increasing transmission efficiency.

Figure 7B is a schematic diagram of distributing data units selectively to a second transmission channel according to an embodiment of the present disclosure. In Figure 7B, the designated channel is switched through the session layer from the first transmission channel to the second transmission channel. Data units 1 and 2 have already been successfully transmitted from the server to the target terminal device through the first transmission channel. Data unit 3 and data unit 4 are data units were unsuccessfully transmitted by the first transmission channel. The importance identifiers are recognized, and it is determined that the data unit 3 needs to be re-transmitted and hence is re-distributed in the session layer to the second transmission channel. Since the importance identifier of the stacked data unit 4 indicates that the data unit 4 does not need to be re-transmitted, data unit 4 may skip the re-transmission and is determined to not distributed to the second transmission channel. Thereby, real-time performance of data transmission is ensured. Data unit 5 subsequent to the data unit 4 is in a new frame of the to-be-transmitted content, and has not been transmitted by the first transmission channel. Hence, data unit 5 is directly distributed through the session layer to the second transmission channel. That is, after the data unit 3 is re-transmitted, the data unit 5 may be directly transmitted to the target terminal device through the second transmission channel, and the second transmission channel is not responsible for transmitting the data units which are not distributed to the second transmission channel.

Reference is made to Figure 7B. Herein, the data units are selectively distributed to a new channel based on the transmission state and the importance identifier when the designated channel is switched, such that important data units in the to-be-transmitted content are transmitted to the target terminal device through the new channel as fast as possible. Thereby, reliability of the data transmission service is ensured. The design of multiple channels further improves reliability of transmission work.

In step S708, the data units distributed in the session layer are transmitted to the target terminal device through the second transmission channel.

Herein the performance requirement of the to-be-transmitted content is obtained, and accordingly a channel matching the performance requirement better is selected as the designated channel of the to-be-transmitted content. Such solution utilizes the session layer for sensing an actual requirement of the to-be-transmitted content in the application scenario, and hence addresses the problem which cannot be solved by merely using the transport layer. The transmission is smoother, and the channel for transmission is more reliable, which matches the actual requirement better and improves quality of the data transmission service.

In practice, multiple transmission channels having different transmission protocols may serve as designated channels of the to-be-transmitted content in some scenarios when one transmission channel cannot meet the performance requirement. In addition, multiple transmission channels may serve as the designated channels in a case that a user of the target terminal device has an account of a high priority. In such cases, the server distributes the data units to different transmission channels concurrently.

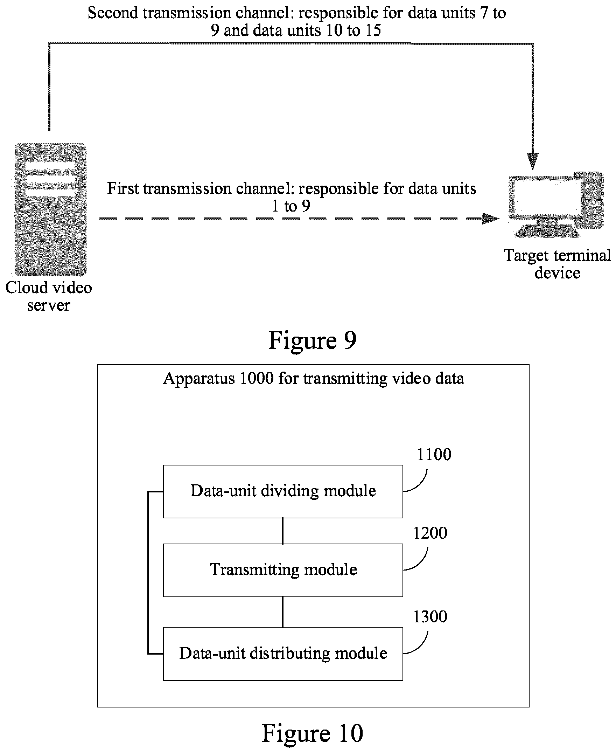

Figure 8 is a schematic diagram of distributing data units among multiple channels according to an embodiment of the present disclosure. For example, the first transmission channel is determined through the session layer to serve as the designated channel of data units 1 to 9, and the second transmission channel is determined through the session layer to serve as the designated channel of data units 10 to 15. When there is congestion in the first transmission channel, the server distributes the to-be-retransmitted data units 7 to 9 to the second transmission channel through management and decision in the session layer, so that the second transmission channel re-transmits the data units 7 to 9 to the target terminal device. Figure 9 is a schematic diagram of distributing data units, which are stacking in a first transmission channel and wait for re-transmission, to a second transmission channel according to an embodiment of the present disclosure.

When the server transmits video data to the target terminal device according to the foregoing embodiments, the transmission channels under different protocols are subject to continuous monitoring. Therefore, when the network sampling result of the second transmission channel serving as the designated channel meets the preset switching condition and the first transmission channel returns to normal, the designated channel is switched again through the session layer. That is, the designated channel is switched back from the second transmission channel to the first transmission channel, so as to ensure quality of data transmission. In such case, the importance identifiers of the data units which are unsuccessfully transmitted are still recognized in the session layer to determine a policy of distribution.

On a basis of the foregoing method for transmitting data, an apparatus for transmitting data is correspondingly provided according to embodiments of the present disclosure. Hereinafter specific implementation of the apparatus is illustrated with reference to the embodiments and the drawings.

Figure 10 is a schematic structural diagram of an apparatus for transmitting data according to an embodiment of the present disclosure. As shown in Figure 10, the apparatus1000 for transmitting data comprises a data-unit dividing module 1100, a transmitting module 1200, and a data-unit distributing module 1300.

The data-unit dividing module 1100 is configured to divide, in a session layer, content to be transmitted to a target terminal device into data units.

The transmitting unit 1200 is configured to transmit a part of the data units, which are distributed in the session layer, to the target terminal device through a designated channel of the content, where a first transmission channel serves as the designated channel of the content.

The data-unit distributing unit 1300 is configured to distribute, in the session layer, another part of the data units to a second transmission channel in response to the designated channel being switched through the session layer from the first transmission channel to a second transmission channel, where the first transmission channel and the second transmission channel adopt different transmission protocols in a transport layer.

The transmitting unit 1200 is further configured to transmit the another part of the data units to the target terminal device through the second transmission channel.

In an optional embodiment, the transmitting module 1200 comprises an information obtaining unit, a responsible-channel determining unit, and a first transmitting unit.

The information obtaining unit is configured obtain a performance requirement of the content through the session layer.

The responsible-channel determining unit is configured to determine the designated channel from the first transmission channel and the second transmission channel through the session layer according to network sampling results of the first transmission channel and the second transmission channel, where the network sampling result of the designated channel meets the performance requirement.

The first transmitting unit is configured to transmit the part of the data units to the target terminal device through the first transmission channel.

In an optional embodiment, the information obtaining unit is configured to: receive the performance requirement of the content from the target terminal device through the session layer; or determine the performance requirement of the content through the session layer based on a type of the content.

In an optional embodiment, the responsible-channel determining unit is configured to: determine the first transmission channel to serve as the designated channel of the content, in response to determining through the session layer that the network sampling results of the first transmission channel and the second transmission channel both meet the performance requirement and the network sampling result of the first transmission channel matches the performance requirement better than the network sampling result of the second transmission channel.

In an optional embodiment, the content comprises a video, and the data-unit dividing module 1100 comprises a data-size determining unit, a division-granularity determining unit, and a dividing unit.

The data-size determining unit is configured to determine a data size of a video frame and a data size of a data packet of the video through the session layer.

The division-granularity determining unit is configured to determine a minimum of the data size of the video frame and the data size of the data packet to serve as division granularity.

The dividing unit is configured to divide the video through the session layer into the data units according to the division granularity.

In an optional embodiment, the data-unit distributing module 1300 is configured to select the another part of the data units through the session layer based on a transmission state and an importance identifier of each of the data units.

In an optional embodiment, the data-unit distributing module 1300 comprises a transmission-state recognizing unit, an importance recognizing unit, and a distributing unit.

The transmission-state recognizing unit is configured to recognize a target data unit based on the transmission state of each of the data unit through the session layer, where the target data unit is unsuccessfully transmitted through the first transmission channel.

The importance recognizing unit is configured to recognize the importance identifier of the target data unit through the session layer.

The distribution unit is configured to: distribute the target data unit through the session layer to the second transmission channel, in response to the importance identifier of the target data unit being a first identifier, and not distribute the target data unit to the second transmission channel, in response to the importance identifier of the target data unit being a second identifier.

In an optional embodiment, the apparatus for transmitting data may further comprise a channel switching module.

The channel switching module is configured to switch the designated channel from the first transmission channel to the second transmission channel.

The channel switching module comprises a sampling unit and a channel switching unit.

The sampling unit is configured to perform network sampling on the first transmission channel through the session layer to obtain a network sampling result of the first transmission channel.

The channel switching unit is configured to switch the designated channel from the first transmission channel to the second transmission channel through the session layer, in response to the network sampling result of the first transmission channel meeting a preset switching condition.

In an optional embodiment, the sampling unit is specifically configured to sample a quantity of data units stacking in the first transmission channel, a packet loss ratio of the first transmission channel, and an RTT of the first transmission channel, through the session layer to obtain the network sampling result of first transmission channel.

The preset switching condition comprises any one or any combination of the first condition, the second condition, and the third condition.

The first condition is that the quantity of the data units stacking in the first transmission channel exceeds a predetermined quantity.

The second condition is that the packet loss ratio of the first transmission channel reaches a predetermined rate.

The third condition is that the RTT of the first transmission channel exceeds predetermined duration.

In an optional embodiment, the apparatus for transmitting data further comprises a channel establishing module.

The channel establishing module is configured to establish the first transmission channel and the second transmission channel, which are to the target terminal device, in the transport layer.

Herein the apparatus for transmitting data is applicable to a terminal device or a server, and the content is multimedia data. In an optional embodiment, the server is a cloud video server, and the multimedia data is a cloud video.

The server involved in the method or the apparatus according to embodiments of the present disclosure may form a blockchain with other servers, and the server is a node in the blockchain.

It can be seen that the first transmission channel and the second transmission channel that are connected to the target terminal device are established in the transport layer, and the two channels adopt different transmission protocols. Before transmitted to the target terminal device, the to-be-transmitted content is divided into the data units in the session layer, and a decision for switching the designated channel for transmitting the to-be-transmitted content is made in the session layer. When the designated channel is switched through the session layer from the first transmission channel to the second transmission channel, the data units are distributed in the session layer to the second transmission channel, and are transmitted to the target terminal device through the second transmission channel. Since the transmission protocols of the two transmission channels are different and the session layer is responsible for dividing and distributing the data units, the data transmission is not subject to a constraint due to an intrinsic set of sequential numbers for a transmission protocol, which facilitates the session layer managing and distributing data on its own. Therefore, the data transmission is freed from the constraint of the same sequence space of one transmission protocol, so that the freedom of transmission and the quality of data transmission services are effectively improved. A user of the target terminal device can experience the transmitted content more smoothly. In addition, the multi-channel design can increase reliability of the data transmission.

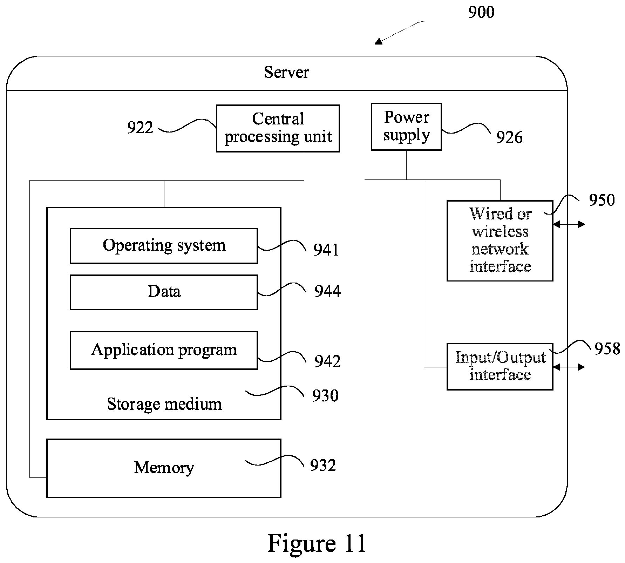

Figure 11 is a schematic structural diagram of a server according to an embodiment of the present disclosure. The server 900 is configured to transmit data. The server 900 may vary greatly due to different configurations or performances, and may comprise one or more central processing units (CPU) 922 (for example, one or more processors), a memory 932, and one or more storage media 930 (for example, one or more mass storage devices) that store application programs 942 or data 944. The memory 932 and the storage medium 930 may be transient or persistent storages. A program stored in the storage medium 930 may comprise one or more modules (not depicted), and each module may comprise a series of operation instructions for the server. Moreover, the CPU 922 may be configured to communicate with the storage medium 930, and execute the series of operation instructions in the storage medium 930 on the server 900.

The server 900 may further include one or more power supplies 926, one or more wired or wireless network interfaces 950, one or more input/output interfaces 958, and/or one or more operating systems 941, for example, Windows Server^{™,} Mac OS X^{TM}, Unix^{™}, Linux^{™}, or FreeB SD^{™}.

In the foregoing embodiment, the server may perform the steps based on the server structure as shown in Figure 11.

The CPU 922 is configured to perform following steps.

Content to be transmitted to a target terminal device is divided in a session layer into data units.

A part of the data units distributed in the session layer is transmitted to the target terminal device through a designated channel of the content, where a first transmission channel serves as the designated channel of the content.

In response to the designated channel being switched through the session layer from the first transmission channel to a second transmission channel, another part of the data units is distributed in the session layer to a second transmission channel, where the first transmission channel and the second transmission channel adopt different transmission protocols in a transport layer.

The another part of the data units distributed in the session layer are transmitted to the target terminal device through the second transmission channel.

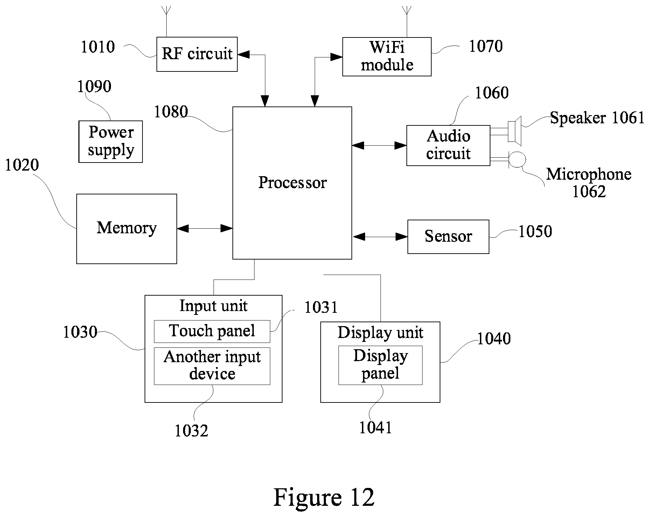

A terminal device for transmitting is further provided according to an embodiment of the present disclosure. In order to facilitate description, only parts related to embodiments of the present disclosure are shown in Figure 12. Specific technical details that are not disclosed may refer to the method embodiments of the present disclosure. The terminal device may be any terminal device, and includes a mobile phone, a tablet computer, a personal digital assistant (PDA), a point of sales (POS), an in-vehicle computer, or the like. Hereinafter a mobile phone is taken as an example.

Figure 12 is a block diagram of partial structure of a mobile phone serving as a terminal device according to an embodiment of the present disclosure. As shown in Figure 12, the mobile phone comprises components such as a radio frequency (RF) circuit 1010, a memory 1020, an input unit 1030, a display unit 1040, a sensor 1050, an audio circuit 1060, a wireless fidelity (WiFi) module 1070, a processor 1080, and a power supply 1090. A person skilled in the art can understand that the structure of the mobile phone as shown in Figure 12 does not constitute a limitation on the mobile phone. The mobile phone may comprise more or fewer components than what is depicted in the figure, some of the components may be combined, or the components may have different arrangement.

Hereinafter the components of the mobile phone are illustrated in detail in conjunction with Figure 12:

The RF circuit 1010 may be configured to receive and transmit signals in a process of receiving and sending messages or a phone-call process, and in particular, configured to transmit downlink messages to the processor 1080 for processing after receiving the downlink messages from a base station. In addition, the RF circuit transmits uplink data to the base station.

The memory 1020 may be configured to store a software program and software modules. The processor 1080 runs the software program and modules stored in the memory 1020, to implement various functional applications and data processing of the mobile phone.

The input unit 1030 may be configured to receive inputted information of digits or characters, and generate a key-signal input related to the user settings and function control of the mobile phone. Specifically, the input unit 1030 may include a touch panel 1031 and another input device 1032.

The display unit 1040 may be configured to display information inputted by the user or information provided for the user, and display various interfaces of the mobile phone. The display unit 1040 may include a display panel 1041.

The mobile phone may further comprise at least one sensor 1050 such as an optical sensor, a motion sensor, and other sensors. Specifically, the optical sensor may include an ambient light sensor and a proximity sensor. The ambient light sensor may adjust luminance of the display panel 1041 according to brightness of environment. The proximity sensor may switch the display panel 1041 and/or backlight off when the mobile phone is close to the ear.

The audio circuit 1060, a speaker 1061, and a microphone 1062 may provide audio interfaces between the user and the mobile phone.

The WiFi is short-distance wireless transmission technology. The mobile phone may help a user send and receive an email, browse a web page, access stream media, and the like, through the WiFi module 1070, which provides wireless broadband Internet access for the user.

The processor 1080 is a control center of the mobile phone, and is connected to various parts of the entire mobile phone via various interfaces and wirings. The processor runs or executes the software program and/or modules stored in the memory 1020, and invokes data stored in the memory 1020, so as perform various functions of the mobile phone and process data.

The mobile phone further comprises the power supply 1090 (such as a battery) for supplying power to the components.

Herein the processor 1080 in the terminal device further performs following functions.

Content to be transmitted to a target terminal device is divided in a session layer into data units.

A part of the data units distributed in the session layer is transmitted to the target terminal device through a designated channel of the content, where a first transmission channel serves as the designated channel of the content.

In response to the designated channel being switched through the session layer from the first transmission channel to a second transmission channel, another part of the data units is distributed in the session layer to a second transmission channel, where the first transmission channel and the second transmission channel adopt different transmission protocols in a transport layer.

The another part of the data units distributed in the session layer are transmitted to the target terminal device through the second transmission channel.

A computer-readable storage medium is further provided according to an embodiment of the present disclosure. The computer-readable storage medium is configured to store program codes, and the program codes are configured to perform any method for transmitting data according to the foregoing embodiments.

A computer program product comprising instructions is further provided according to an embodiment of the present disclosure. The computer program product when executed on a computer causes the computer to any method for transmitting data according to the foregoing embodiments.

A person skilled in the art can understand clearly that in order to facilitate convenient and brief description, detailed operating process of the system, the apparatus, and the units as described above may refer to the corresponding process in the method embodiments, and details are not repeated herein.

In several embodiments of the present disclosure, the disclosed system, apparatus, and method may be implemented in other manners. For example, the described apparatus embodiments are only exemplary. For example, the division of the units is only based on logical functions and there may be another manner of division in practice. For example, multiple units or components may be combined or integrated into another system, or some features may be ignored or not performed. In addition, the shown or discussed mutual couplings, direct couplings, or communication connections may be implemented through some interfaces. The indirect couplings or communication connections among apparatuses or units may be electrical, mechanical, or implemented in other forms.

The units described as separate parts may or may not be physically separate. Parts displayed as units may or may not be physical units, and may be located in one position or distributed among network units. Some or all of the units may be selected according to an actual requirement to achieve an objective of the solutions according to embodiments.

In addition, function units in embodiments of the present disclosure may be integrated into one processing unit. Each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such understanding, all or a part, which contributes to the related art in essence, of the technical solutions of the present disclosure may be implemented in a form of a software product. The computer software product is stored in a storage medium, and comprises several instructions for instructing a computer device (which may be a personal computer, a server, a network device, or the like) to perform all or some of the steps of the method according to embodiments of the present disclosure. The foregoing storage medium includes any medium that can store program codes, such as a USB flash drive, a removable hard disk, a read only memory (ROM), a random access memory (RAM), a magnetic disk, or an optical disc.

## Claims

1. A method for transmitting data, executable by a computer device, wherein the method comprises:
dividing (S401, S701), in a session layer, content to be transmitted to a target terminal device into data units;
transmitting (S402) a part of the data units, which are distributed in the session layer, to the target terminal device through a designated channel of the content, wherein a first transmission channel serves as the designated channel of the content; and
in response to the designated channel being switched through the session layer from the first transmission channel to a second transmission channel,
distributing (S403), in the session layer, another part of the data units to a second transmission channel wherein the first transmission channel and the second transmission channel adopt different transmission protocols in a transport layer; and
transmitting (S404) the another part of the data units to the target terminal device through the second transmission channel.

2. The method according to claim 1, further comprising:
obtaining (S702) a performance requirement of the content through the session layer; and
determining (S703) the designated channel from the first transmission channel and the second transmission channel through the session layer according to network sampling results of the first transmission channel and the second transmission channel, wherein the network sampling result of the designated channel meets the performance requirement.

3. The method according to claim 2, wherein obtaining (S702) the performance requirement of the content through the session layer comprises:
receiving the performance requirement of the content from the target terminal device through the session layer; or
determining the performance requirement of the content through the session layer based on a type of the content.

4. The method according to claim 2, wherein the determining (S703) the designated channel from the first transmission channel and the second transmission channel through the session layer according to the network sampling results of the first transmission channel and the second transmission channel comprises:
determining the first transmission channel to serve as the designated channel of the content, in response to determining through the session layer that the network sampling results of the first transmission channel and the second transmission channel both meet the performance requirement and the network sampling result of the first transmission channel matches the performance requirement better than the network sampling result of the second transmission channel.

5. The method according to claim 1, wherein the content comprises a video, and dividing (S401, S701), in the session layer, the content to be transmitted to the target terminal device into data units comprises:
determining a data size of a video frame and a data size of a data packet of the video through the session layer;
determining a minimum of the data size of the video frame and the data size of the data packet to serve as division granularity; and
dividing the video through the session layer into the data units according to the division granularity.

6. The method according to claim 1, wherein distributing (S403), in the session layer, the another part of the data units to the second transmission channel comprises:
selecting the another part of the data units through the session layer based on a transmission state and an importance identifier of each of the data units.

7. The method according to claim 6, wherein selecting the another part of the data units through the session layer based on the transmission state and the importance identifier of each of the data units comprises:
recognizing a target data unit based on the transmission state of each of the data unit through the session layer, wherein the target data unit is unsuccessfully transmitted through the first transmission channel;
recognizing the importance identifier of the target data unit through the session layer;
distributing the target data unit through the session layer to the second transmission channel, in response to the importance identifier of the target data unit being a first identifier; and
not distributing the target data unit to the second transmission channel, in response to the importance identifier of the target data unit being a second identifier.

8. The method according to claim 1, further comprising:
performing (S704) network sampling on the first transmission channel through the session layer to obtain a network sampling result of the first transmission channel; and
switching (S706) the designated channel from the first transmission channel to the second transmission channel through the session layer, in response to the network sampling result of the first transmission channel meeting a preset switching condition.

9. The method according to claim 8, wherein performing (S704) the network sampling on the first transmission channel through the session layer to obtain the network sampling result of the first transmission channel comprises:
sampling a quantity of data units stacking in the first transmission channel, a packet loss ratio of the first transmission channel, and an RTT of the first transmission channel, through the session layer to obtain the network sampling result of first transmission channel; and
wherein the preset switching condition comprises any one or any combination of:
the quantity of the data units stacking in the first transmission channel exceeds a predetermined quantity;
the packet loss ratio of the first transmission channel reaches a predetermined rate;
and
the RTT of the first transmission channel exceeds predetermined duration.

10. The method according to claim 1, wherein before transmitting (S402) the part of the data units, which are distributed in the session layer, to the target terminal device through the designated channel of the content, the method further comprises:
establishing (S700) the first transmission channel and the second transmission channel, which are to the target terminal device, in the transport layer.

11. The method according to claim 1, wherein the method is executed by a server, and the content is multimedia data.

12. The method according to claim 1, wherein the server is a cloud video server, and the multimedia data is a cloud video.

13. A server for transmitting video data, comprising a processor and a memory, wherein:
the memory is configured to store a program code and transmit the program code to the processor, and
the processor is configured to perform the method according to any one of claims 1 to 12 according to instructions in the program code.

14. A computer-readable storage medium, storing a program code, wherein the program code is configured to perform the method according to any one of claims 1 to 12.

15. A computer program product, comprising instructions, wherein the computer program product when executed on a computer causes the computer to perform the method according to any one of claims 1 to 12.

## Patentansprüche

1. Verfahren zum Übertragen von Daten, das von einer Computervorrichtung ausführbar ist, wobei das Verfahren Folgendes umfasst:
Teilen (S401, S701) eines Inhalts, der zu einer Zielendgerätevorrichtung zu übertragen ist, in einer Sitzungsschicht in Dateneinheiten;
Übertragen (S402) eines Teils der Dateneinheiten, die in der Sitzungsschicht verteilt sind, über einen benannten Kanal des Inhalts zur Zielendgerätevorrichtung, wobei ein erster Übertragungskanal als der benannte Kanal des Inhalts dient; und
in Reaktion darauf, dass der benannte Kanal über die Sitzungsschicht vom ersten Übertragungskanal zu einem zweiten Übertragungskanal umgeschaltet wird,
Verteilen (S403) eines anderen Teils der Dateneinheiten in der Sitzungsschicht in einen zweiten Übertragungskanal, wobei der erste Übertragungskanal und der zweite Übertragungskanal verschiedene Übertragungsprotokolle in einer Transportschicht annehmen; und
Übertragen (S404) des anderen Teils der Dateneinheiten über den zweiten Übertragungskanal zur Zielendgerätevorrichtung.

2. Verfahren nach Anspruch 1, das ferner Folgendes umfasst:
Erhalten (S702) einer Leistungsanforderung des Inhalts über die Sitzungsschicht; und
Bestimmen (S703) des benannten Kanals vom ersten Übertragungskanal und vom zweiten Übertragungskanal über die Sitzungsschicht gemäß Netzwerkabtastergebnissen des ersten Übertragungskanals und des zweiten Übertragungskanals, wobei das Netzwerkabtastergebnis des benannten Kanals die Leistungsanforderung erfüllt.

3. Verfahren nach Anspruch 2, wobei das Erhalten (S702) der Leistungsanforderung des Inhalts über die Sitzungsschicht Folgendes umfasst:
Empfangen der Leistungsanforderung des Inhalts über die Sitzungsschicht von der Zielendgerätevorrichtung; oder
Bestimmen der Leistungsanforderung des Inhalts über die Sitzungsschicht auf Basis einer Art des Inhalts.

4. Verfahren nach Anspruch 2, wobei das Bestimmen (S703) des benannten Kanals vom ersten Übertragungskanal und vom zweiten Übertragungskanal über die Sitzungsschicht gemäß den Netzwerkabtastergebnissen des ersten Übertragungskanals und des zweiten Übertragungskanals Folgendes umfasst:
Bestimmen des ersten Übertragungskanals zum Dienen als der benannte Kanal des Inhalts in Reaktion auf das Bestimmen über die Sitzungsschicht, dass die Netzwerkabtastergebnisse des ersten Übertragungskanals und des zweiten Übertragungskanal beide die Leistungsanforderung erfüllen und das Netzwerkabtastergebnis des ersten Übertragungskanals mit der Leistungsanforderung besser übereinstimmt als das Netzwerkabtastergebnis des zweiten Übertragungskanals.

5. Verfahren nach Anspruch 1, wobei der Inhalt ein Video umfasst und das Teilen (S401, S701) des Inhalts, der zur Zielendgerätevorrichtung zu übertragen ist, in der Sitzungsschicht in Dateneinheiten Folgendes umfasst:
Bestimmen einer Datengröße eines Videoframes und einer Datengröße eines Datenpakets des Videos über die Sitzungsschicht;
Bestimmen eines Minimums der Datengröße des Videoframes und der Datengröße des Datenpakets, das als eine Teilungsgranularität dienen soll; und
Teilen des Videos über die Sitzungsschicht gemäß der Teilungsgranularität in die Dateneinheiten.

6. Verfahren nach Anspruch 1, wobei das Verteilen (S403) des anderen Teils der Dateneinheiten in der Sitzungsschicht im zweiten Übertragungskanal Folgendes umfasst:
Auswählen des anderen Teils der Dateneinheiten über die Sitzungsschicht auf Basis eines Übertragungszustands und einer Wichtigkeitskennung von jeder der Dateneinheiten.

7. Verfahren nach Anspruch 6, wobei das Auswählen des anderen Teils der Dateneinheiten über die Sitzungsschicht auf Basis des Übertragungszustands und der Wichtigkeitskennung von jeder der Dateneinheiten Folgendes umfasst:
Erkennen einer Zieldateneinheit auf Basis des Übertragungszustands von jeder der Dateneinheiten über die Sitzungsschicht, wobei die Zieldateneinheit über den ersten Übertragungskanal erfolglos übertragen wird;
Erkennen der Wichtigkeitskennung der Zieldateneinheit über die Sitzungsschicht;
Verteilen der Zieldateneinheit über die Sitzungsschicht zum zweiten Übertragungskanal in Reaktion darauf, dass die Wichtigkeitskennung der Zieldateneinheit eine erste Kennung ist; und
kein Verteilen der Zieldateneinheit zum zweiten Übertragungskanal in Reaktion darauf, dass die Wichtigkeitskennung der Zieldateneinheit eine zweite Kennung ist.

8. Verfahren nach Anspruch 1, das ferner Folgendes umfasst:
Durchführen (S704) einer Netzwerkabtastung über die Sitzungsschicht am ersten Übertragungskanal, um ein Netzwerkabtastergebnis des ersten Übertragungskanals zu erhalten; und
Umschalten (S706) des benannten Kanals vom ersten Übertragungskanal über die Sitzungsschicht zum zweiten Übertragungskanal in Reaktion darauf, dass das Netzwerkabtastergebnis des ersten Übertragungskanals eine voreingestellte Umschaltbedingung erfüllt.

9. Verfahren nach Anspruch 8, wobei das Durchführen (S704) der Netzwerkabtastung über die Sitzungsschicht am ersten Übertragungskanal, um das Netzwerkabtastergebnis des ersten Übertragungskanals zu erhalten, Folgendes umfasst:
Abtasten einer Menge von Dateneinheiten, die im ersten Übertragungskanal gestapelt sind, eines Paketverlustverhältnisses des ersten Übertragungskanals und einer RTT des ersten Übertragungskanals über die Sitzungsschicht, um das Netzwerkabtastergebnis des ersten Übertragungskanals zu erhalten; und
wobei die voreingestellte Umschaltbedingung eines oder eine Kombination von Folgendem umfasst:
eine Menge der Dateneinheiten, die im ersten Übertragungskanal gestapelt sind, überschreitet eine vorbestimmte Menge;
das Paketverlustverhältnis des ersten Übertragungskanals hat die vorbestimmte Rate erreicht; und
die RTT des ersten Übertragungskanals hat eine vorbestimmte Dauer überschritten.

10. Verfahren nach Anspruch 1, wobei das Verfahren vor dem Übertragen (S402) des Teils der Dateneinheiten, die in der Sitzungsschicht verteilt sind, über den benannten Kanal des Inhalts zur Zielendgerätevorrichtung ferner Folgendes umfasst:
Einrichten (S700) des ersten Übertragungskanals und des zweiten Übertragungskanals, die zur Zielendgerätevorrichtung verlaufen, in der Transportschicht.

11. Verfahren nach Anspruch 1, wobei das Verfahren von einem Server ausgeführt wird und der Inhalt Multimediadaten ist.

12. Verfahren nach Anspruch 1, wobei der Server ein Cloudvideoserver ist und die Multimediadaten ein Cloudvideo sind.

13. Server zum Übertragen von Videodaten, der einen Prozessor und einen Speicher umfasst, wobei:
der Speicher dazu ausgelegt ist, einen Programmcode zu speichern und den Programmcode zum Prozessor zu übertragen, und
der Prozessor dazu ausgelegt ist, das Verfahren gemäß den Anweisungen im Programmcode nach einem der Ansprüche 1 bis 12 durchzuführen.

14. Computerlesbares Speichermedium, auf dem ein Programmcode gespeichert ist, wobei der Programmcode dazu ausgelegt ist, das Verfahren nach einem der Ansprüche 1 bis 12 durchzuführen.

15. Computerprogrammprodukt, das Anweisungen umfasst, wobei das Computerprogrammprodukt, wenn es auf einem Computer ausgeführt wird, den Computer veranlasst, das Verfahren nach einem der Ansprüche 1 bis 12 durchzuführen.

## Revendications

1. Procédé de transmission de données exécutable par un dispositif informatique, dans lequel le procédé comprend :
dans une couche de session, la division (S401, S701) d'un contenu à transmettre à un dispositif terminal cible en unités de données ;
la transmission (S402) d'une partie des unités de données qui sont distribuées dans la couche de session au dispositif terminal cible via un canal désigné du contenu, dans lequel un premier canal de transmission sert de canal désigné du contenu ; et
en réponse à la commutation du canal désigné du premier canal de transmission à un deuxième canal de transmission à travers la couche de session,
la distribution (S403), dans la couche de session, d'une autre partie des unités de données à un deuxième canal de transmission, dans lequel le premier canal de transmission et le deuxième canal de transmission adoptent des protocoles de transmission différents dans une couche transport ; et
la transmission (S404) de cette autre partie des unités de données au dispositif terminal cible via le deuxième canal de transmission.

2. Procédé selon la revendication 1, comprenant en outre :
l'obtention (S702) d'une exigence de performance du contenu à travers la couche de session ; et
la détermination (S703) du canal désigné à partir du premier canal de transmission et du deuxième canal de transmission à travers la couche de session selon des résultats d'échantillonnage de réseau du premier canal de transmission et du deuxième canal de transmission, dans lequel le résultat d'échantillonnage de réseau du canal désigné satisfait à l'exigence de performance.

3. Procédé selon la revendication 2, dans lequel l'obtention (S702) de l'exigence de performance du contenu à travers la couche de session comprend :
la réception de l'exigence de performance du contenu du dispositif terminal cible à travers la couche de session ; ou
la détermination de l'exigence de performance du contenu à travers la couche de session sur la base d'un type du contenu.

4. Procédé selon la revendication 2, dans lequel la détermination (S703) du canal désigné à partir du premier canal de transmission et du deuxième canal de transmission à travers la couche de session selon les résultats d'échantillonnage de réseau du premier canal de transmission et du deuxième canal de transmission comprend :
la détermination du premier canal de transmission devant servir de canal désigné du contenu en réponse à la détermination, à travers la couche de session, de la satisfaction de l'exigence de performance par les résultats d'échantillonnage de réseau du premier canal de transmission et du deuxième canal de transmission, et en réponse à une meilleurs concordance du résultat d'échantillonnage de réseau du premier canal de transmission avec l'exigence de performance que le résultat d'échantillonnage de réseau du deuxième canal de transmission.

5. Procédé selon la revendication 1, dans lequel le contenu comprend une vidéo, et la division (S401, S701), dans la couche de session, du contenu à transmettre au dispositif terminal cible en unités de données comprend :
la détermination d'une taille de données d'une trame vidéo et une taille de données d'un paquet de données de la vidéo à travers la couche de session ;
la détermination d'une taille minimale de la taille de données de la trame vidéo et de la taille de données du paquet de données pour servir de granularité de division ; et
la division de la vidéo à travers la couche de session en unités de données selon la granularité de division.

6. Procédé selon la revendication 1, dans lequel la distribution (S403), dans la couche de session, de cette autre partie des unités de données au deuxième canal de transmission comprend :
la sélection de cette autre partie des unités de données à travers la couche de session sur la base d'un état de transmission et d'un identifiant d'importance de chacune des unités de données.

7. Procédé selon la revendication 6, dans lequel la sélection de cette autre partie des unités de données à travers la couche de session sur la base de l'état de transmission et de l'identifiant d'importance de chacune des unités de données comprend :
la reconnaissance d'une unité de données cible sur la base de l'état de transmission de chacune des unités de données à travers la couche de session, dans lequel l'unité de données cible n'est pas transmise avec succès à travers le premier canal de transmission ;
la reconnaissance de l'identifiant d'importance de l'unité de données cible à travers la couche de session ;
la distribution de l'unité de données cible à travers la couche de session au deuxième canal de transmission lorsque l'identifiant d'importance de l'unité de données cible est un premier identifiant ; et
la non distribution de l'unité de données cible au deuxième canal de transmission, lorsque l'identifiant d'importance de l'unité de données cible est un deuxième identifiant.

8. Procédé selon la revendication 1, comprenant en outre :
la réalisation (S704) d'un échantillonnage de réseau sur le premier canal de transmission à travers la couche de session pour obtenir un résultat d'échantillonnage de réseau du premier canal de transmission ; et
la commutation (S706) du canal désigné du premier canal de transmission au deuxième canal de transmission à travers la couche de session, en réponse à la satisfaction d'une condition de commutation prédéfinie par le résultat d'échantillonnage de réseau du premier canal de transmission.

9. Procédé selon la revendication 8, dans lequel la réalisation (S704) de l'échantillonnage de réseau sur le premier canal de transmission à travers la couche de session pour obtenir le résultat d'échantillonnage de réseau du premier canal de transmission comprend :
l'échantillonnage d'une quantité d'unités de données s'empilant dans le premier canal de transmission, d'un taux de perte de paquets du premier canal de transmission, et d'un RTT [temps d'aller-retour] du premier canal de transmission, à travers la couche de session pour obtenir le résultat d'échantillonnage de réseau d'un premier canal de transmission ;
et
dans lequel la condition de commutation prédéfinie comprend l'une des conditions suivantes ou toute combinaison de celles-ci :
la quantité des unités de données s'empilant dans le premier canal de transmission dépasse une quantité prédéterminée ;
le taux de perte de paquets du premier canal de transmission atteint un taux prédéterminé ; et
le RTT du premier canal de transmission dépasse une durée prédéterminée.

10. Procédé selon la revendication 1, dans lequel, avant de transmettre (S402) la partie des unités de données qui sont distribuées dans la couche de session au dispositif terminal cible via le canal désigné du contenu, le procédé comprend en outre :
l'établissement (S700) du premier canal de transmission et du deuxième canal de transmission, qui sont destinés au dispositif terminal cible, dans la couche transport.

11. Procédé selon la revendication 1, dans lequel le procédé est exécuté par un serveur, et le contenu consiste en des données multimédia.

12. Procédé selon la revendication 1, dans lequel le serveur est un serveur vidéo en nuage, et les données multimédia sont une vidéo en nuage.

13. Serveur pour transmettre des données vidéo, comprenant un processeur et une mémoire, dans lequel :
la mémoire est configurée pour stocker un code de programme et transmettre le code de programme au processeur, et
le processeur est configuré pour réaliser le procédé selon l'une des revendications 1 à 12 selon les instructions dans le code de programme.

14. Support de stockage lisible par ordinateur, stockant un code de programme, dans lequel le code de programme est configuré pour réaliser le procédé selon l'une des revendications 1 à 12.

15. Produit de programme informatique comprenant des instructions, dans lequel le produit de programme informatique lorsqu'il est exécuté sur un ordinateur, amène l'ordinateur à réaliser le procédé selon l'une des revendications 1 à 12.
